# EUROPÄISCHE PATENTANMELDUNG

(11) **EP 4 647 375 A1**
(43) Veröffentlichungstag der Anmeldung: **12.11.2025**
(21) Anmeldenummer: 24174885.4
(22) Anmeldetag: 08.05.2024
(51) Int. Cl.: B65G 65/23, B65D 83/00, B65D 88/56

(54) **ENTLEERVORRICHTUNG FÜR SCHÜTTGÜTER**

(71) Anmelder: Moudry, Benjamin, 76829 Landau (DE)
(72) Erfinder: Moudry, Benjamin, 76829 Landau (DE)
(74) Vertreter: Patentanwälte Dr. Keller, Schwertfeger Partnerschaft mbB

(57) **Zusammenfassung**

Die vorliegende Erfindung betrifft eine Entleervorrichtung für Schüttguter (62), die auf Paletten (60) gelagert werden, umfassend einen Behälter (12; 112; 212; 312) mit einer Oberseite, einer Unterseite, zwei entgegengesetzt liegenden Seiten, einer Rückseite und einer Vorderseite, wobei der Behälter (12; 112; 212; 312) an der Unterseite und der Vorderseite jeweils zumindest abschnittsweise offen ist und wobei an den beiden entgegengesetzt liegenden Seiten jeweils ein seitliches Wandelement (16, 18; 116, 118; 216, 218; 316; 318), an der Rückseite ein rückseitiges Wandelement (20; 120; 220; 320) und an der Oberseite ein oberes Wandelement (22; 122; 222; 322) vorgesehen sind, die zur Ausbildung des Behälters (12; 112; 212; 312) miteinander verbunden sind, und eine Palettensicherung (40; 140; 240; 340) mit einem geöffneten Zustand und einem geschlossenen Zustand, wobei die Palettensicherung (40; 140; 240; 340) an dem Behälter (12; 112; 212; 312) vorgesehen ist.

## Beschreibung

Die vorliegende Erfindung betrifft eine Entleervorrichtung für Schüttgüter, die auf Paletten gelagert werden.

Bekanntermaßen besteht die Notwendigkeit, dass Brenn- oder Kaminholz nach der Herstellung aus waldfrischem Brennholz getrocknet werden muss. Um den Trocknungsprozess zu beschleunigen, werden verschiedene technische Trocknungsmethoden verwendet. Die meisten dieser Trocknungsmethoden haben jedoch den Nachteil, dass hierbei Energie- und/oder Materialkosten anfallen. Aufgrund der gestiegenen Energiekosten wird die technische Trocknung von Brenn- oder Kaminholz daher immer uninteressanter. Deshalb wird vermehrt auf eine natürliche Lufttrocknung gesetzt. Bei einer beispielhaften Art der natürlichen Lufttrocknung werden die einzelnen Brenn- oder Kaminholzstücke geordnet oder ungeordnet mit einem Netz umwickelt und somit zusammengehalten und zum Trocknen auf eine Palette gelegt.

Ist der Trocknungsvorgang abgeschlossen, so dass das Brenn- oder Kaminholz für die Verbrennung verwendet werden kann, müssen die in den Netzen verpackten und auf der Palette gelagerten Brenn- oder Kaminholzstücke in entsprechende Transport- oder Lagergebinde überführt werden. Solche Transport- oder Lagergebinde können beispielsweise transportable Transportbehälter wie etwa Container sein oder Lager- oder Ladeflächen von Fahrzeugen. Insbesondere müssen die einzelnen Brennholz- oder Kaminholzstücke aus dem Netz herausgenommen bzw. von dem Netz befreit und von der Palette heruntergenommen werden.

Bei einem oben offenen Transport- oder Lagergebinde erfolgt die Umlagerung der Brenn- oder Kaminholzstücke von dem Lagerplatz in das oben offene Transport- oder Lagergebinde aktuell beispielsweise dadurch, dass ein Gabelstapler die Palette, auf der sich das in einem Netz befindliche Brenn- oder Kaminholz befindet, aufnimmt und zu dem Zielort fährt, an dem das Brenn- oder Kaminholz in den oben offenen Transport- oder Lagergebinde überführt werden soll. Am Zielort wird die Palette mit dem darauf befindlichen Brenn- oder Kaminholz angehoben. Danach wird das Netz in der Regel manuell aufgeschnitten und anschließend die Palette leicht geneigt, so dass sich das auf der Palette befindliche Holz in das unterhalb der Palette oben offene Transport- oder Lagergebinde, wie etwa einen Container bewegt.

Dieses Verfahren birgt das Risiko, dass sich das Netz in den Brenn- oder Kaminholzteilen verfängt und zusammen mit dem Brenn- oder Kaminholzteilen in das oben offene Transport- oder Lagergebinde wie etwa einen Container oder dergleichen mitüberführt wird. Weiterhin kann es passieren, dass sich die Palette vom Gabelstapler löst und ebenfalls in das Transport- oder Lagergebinde gelangt, in dem das Brennholz bzw. Kaminholz gesammelt wird. Dies führt dazu, dass anschließend die Palette und/oder das Netz aus dem Transport- oder Lagergebinde, in dem sich die Brennholz- oder Kaminholzstücke befinden, entfernt werden muss. Dieses ist zum einen zeitaufwändig und zum anderen nicht immer risikoarm.

Darüber hinaus ist es für das Bedienpersonal zum Teil recht risikoreich, das Netz auf der angehobenen Palette aufzuschneiden, da sich die Palette mit den Brennholz- oder Kaminholzstücken zu diesem Zeitpunkt häufig bereits deutlich über dem Boden befindet und somit nur schwer erreichbar ist.

Es ist Aufgabe der vorliegenden Erfindung, eine Entleervorrichtung für Schüttgüter, die auf Paletten gelagert werden, bereitzustellen, bei der sichergestellt ist, dass nur das Schüttgut selbst in ein dafür bereitgestelltes Gebinde gelangt. Darüber hinaus ist es Aufgabe der vorliegenden Erfindung, eine Entleervorrichtung für Schüttgüter, die auf Paletten gelagert werden, bereitzustellen, welche eine hohe Arbeitssicherheit für das Bedienpersonal bereitstellt.

Erfindungsgemäß wird die Aufgabe durch eine Entleervorrichtung für Schüttgüter, die auf Paletten gelagert werden, gelöst, umfassend einen Behälter mit einer Oberseite, einer Unterseite, zwei entgegengesetzt liegenden Seiten, einer Rückseite und einer Vorderseite, wobei der Behälter an der Unterseite und an der Vorderseite jeweils zumindest abschnittsweise offen ist und wobei an den beiden entgegengesetzt liegenden Seiten jeweils ein seitliches Wandelement, an der Rückseite ein rückseitiges Wandelement und an der Oberseite ein oberes Wandelement vorgesehen sind, die zur Ausbildung des Behälters miteinander verbunden sind, und eine Palettensicherung mit einem geöffneten Zustand und einem geschlossenen Zustand, wobei die Palettensicherung an dem Behälter vorgesehen ist.

Der Behälter ist vorzugsweise kastenförmig mit flächigen ebenen Wandelementen ausgebildet, so dass der Behälter im Wesentlichen die Form eines Quaders aufweist. Die Wandelemente können jedoch auch gekrümmt sein. Beispielsweise kann der Behälter in einer Ansicht von oben U-Förmig ausgebildet sein, wobei die beiden seitlichen Wandelemente die Schenkel und das rückseitige Wandelement die Basis der U-förmigen Grundform bilden.

Die Palettensicherung dient dazu, in ihrem geschlossenen Zustand eine Palette zu halten. Vorzugsweise ist die Palettensicherung im Bereich der Unterseite vorgesehen und an wenigstens einem der folgenden Wandelemente befestigt: rückseitiges Wandelement und seitliches Wandelement. Die Palettensicherung kann sowohl außen am Behälter als auch im Innern des Behälters befestigt sein.

Die Maße des Behälters sind so gewählt, dass eine Palette zwischen die beiden entgegengesetzt liegenden seitlichen Wandelemente mit Spiel passt. Vorzugsweise ist die Unterseite vollständig offen ausgebildet und die Palette bedeckt zumindest einen Teil der Unterseite. Idealerweise ist die Palette geringfügig kleiner als die Unterseite und bedeckt somit die Unterseite der Palette vollständig. Wenn sich die Palettensicherung im geschlossenen Zustand befindet, kann die Palette somit die Funktion eines unteren Wandelements des Behälters übernehmen. Im geöffneten Zustand der Palettensicherung besteht keine Verbindung zwischen der Palette und dem Behälter.

Die Vorderseite kann vollständig offen sein oder einen vorderen Wandabschnitt aufweisen, der die Vorderseite zumindest abschnittsweise bedeckt. Der vordere Wandabschnitt kann fest oder schwenkbar mit dem Behälter verbunden sein.

Bei einer bevorzugten Ausführungsform ist der Behälter breitenverstellbar. Unter breitenverstellbar wird hier eine Veränderung des Abstands der beiden seitlichen Wandelemente verstanden.

Beispielsweise werden das rückseitige Wandelement aus zwei separaten rückseitigen Wandelementteilen und das obere Wandelement aus zwei separaten oberen Wandelementteilen gebildet, wobei vorzugsweise jeweils ein rückseitiges Wandelementteil und ein oberes Wandelementteil an einem Seitenteil befestigt ist und das jeweils andere rückseitige Wandelementteil und obere Wandelementteil an dem anderen Seitenteil befestigt ist. Hierdurch entsteht ein Behälter mit zwei getrennten Behälterteilen.

Zur Ausbildung eines breitenverstellbaren Behälters mit den zwei getrennten Behälterteilen ist ein Verbindungsmittel vorgesehen, mit Hilfe dessen die beiden getrennten Behälterteile verschiebbar miteinander verbunden sind. Beispielsweise kann ein Schienensystem vorgesehen sein, das die beiden Behälterteile miteinander verbindet und das so ausgelegt ist, dass der Abstand zwischen den beiden Behälterteilen verändert werden kann. Die beiden Behälterteile können mit Abstand voneinander verbunden sein oder sich überlappen. Aus Stabilitätsgründen und aus Gründen der Sauberkeit ist eine Ausführungsform, bei der sich die beiden Behälterteile abschnittsweise überlappen, bevorzugt.

Die Palettensicherung kann beispielsweise eine Klemmvorrichtung sein oder eine Verriegelungsvorrichtung mit wenigstens einem Bolzen. Es versteht sich, dass die Palettensicherung auch eine Kombination daraus sein kann.

Bei einer Art von Klemmvorrichtung befinden sich entsprechende Klemmelemente im Innern des Behälters an den beiden seitlichen Wandelementen, gegebenenfalls auch an dem rückseitigen Wandelement. Sie klemmen die Palette, wenn sich die Palette an der Unterseite des Behälters befindet.

Insbesondere bei einer Ausführungsform, bei der der Behälter breitenverstellbar ist und aus zwei Behälterteilen besteht, kann die Klemmvorrichtung Klemmelemente umfassen, die außen an dem Behälter angreifen. Beispielsweise können verstellbare Greifzangen außen an dem Behälter angreifen. Die Klemmelemente können einstückig mit dem Behälter ausgebildet sein. Insbesondere können die beiden Behälterteile die Funktion von Backen einer Zange übernehmen.

Bei einer Palettensicherung, die eine Verriegelungsvorrichtung mit wenigstens einem Bolzen umfasst, können ein oder mehrere Bolzen an einer oder beiden seitlichen Wandelementen befestigt sein. Der Bolzen oder die Bolzen können linear verschoben oder gedreht werden. Im geöffneten Zustand der Palettensicherung sind der oder die Bolzen je nach Art der Ausbildung zurückgefahren oder eingeschwenkt, so dass die Palette in den Behälter eingeführt werden kann. Im geschlossenen Zustand der Palettensicherung sind der oder die Bolzen je nach Art der Ausbildung ausgefahren oder ausgeschwenkt und greifen in den an Paletten ausgebildeten Hohlraum analog wie Zinken eines Gabelstaplers, um die Palette zwischen den beiden seitlichen Wandelementen des Behälters zu halten.

Die Palettensicherung, wie etwa die Klemmvorrichtung oder die Verriegelungsvorrichtung mit wenigstens einem Bolzen, kann beispielsweise hydraulisch betätigt werden.

Das Vorsehen eines Behälters, in dem eine Palette mit Stückgütern mittels der Palettensicherung befestigbar ist, hat den Vorteil, dass die Palette selbst gesichert ist und das sich auf der Palette befindliche Schüttgut von dem Behälter umgeben ist. Sollte sich während des Transports versehentlich Schüttgut lösen, fällt dieses nicht sofort von der Palette herunter, sondern bleibt im Innern des Behälters liegen. Dies erhöht unter anderem die Arbeitssicherheit.

Bei einer bevorzugten Weiterbildung ist wenigstens eine Rückhaltevorrichtung an dem Behälter vorgesehen. Die Rückhaltevorrichtung dient beispielsweise dazu, eine Abdeckung der Schüttgüter, wie etwa eine Folie oder ein Netz, zu halten. So kann die Rückhaltevorrichtung zum Beispiel ein Haken sein. Es versteht sich, dass es von Vorteil ist, dass eine Vielzahl von Haken vorgesehen ist, um eine Abdeckung wie etwa ein Netz oder eine Folie an dem Behälter zu befestigen. Die Haken können im Innern des Behälters als auch an der Außenseite des Behälters vorgesehen sein.

Zusätzlich oder alternativ kann die Rückhaltevorrichtung eine Klemmleiste aufweisen, die dazu dient, die Abdeckung an den Behälter zu klemmen und so dafür sorgt, dass die Abdeckung an dem Behälter befestigt ist. Weiterhin ist der Einsatz von Bolzen möglich, um die Abdeckung am Behälter zu befestigen.

Es ist bekannt, dass Schüttgüter in Form von Stücken, wie etwa Brenn- oder Kaminholzstücke geordnet oder ungeordnet in Gitterboxen gelagert werden, wobei die Gitterboxen dann häufig wiederum auf Paletten stehen. In den Fällen, in denen Schüttgüter geordnet oder ungeordnet in Boxen, insbesondere Gitterboxen gelagert werden, ist die Rückhaltevorrichtung ausgelegt, die Boxen in dem Behälter zu halten. So können beispielsweise an der Vorderseite des Behälters Bolzen oder Haken vorgesehen sein, die mit der Box wechselwirken.

Bei einer besonders bevorzugten Ausführungsform ist die Rückhaltevorrichtung zwischen einer Eingriffsstellung und einer geöffneten Stellung verstellbar, insbesondere hydraulisch verstellbar. In der Eingriffsstellung kann eine Abdeckung oder eine Gitterbox gehalten werden, in der geöffneten Stellung ist keine Befestigung der Abdeckung oder Gitterbox an der Rückhaltevorrichtung möglich. Vorzugsweise ist die Steuerung der Rückhaltevorrichtung mit einer Steuerung der Palettensicherung verbunden. Wird die Palettensicherung gelöst, wird auch die Rückhaltevorrichtung gelöst. Dadurch kann eine Reinigung des Behälters nach einem Entleervorgang vereinfacht werden.

Um die Entleervorrichtung einfach transportieren zu können, ist es von Vorteil, dass ein Transportelement vorgesehen ist, welches mit dem Behälter verbunden ist.

Das Transportelement kann eine Einfahrtasche geeignet für den Einsatz eines Gabelstaplers sein.

Alternativ kann das Transportelement die Form einer Palette aufweisen. Ein solches palettenartiges Transportelement umfasst eine Grundplatte und wenigstens einen daran befestigten Abstandshalter und kann dazu verwendet werden, die Entleervorrichtung mittels eines Gabelstaplers aufzunehmen. Beispielsweise weist ein als Palette ausgebildetes Transportelement eine rechteckige Grundplatte sowie eine vordere Stirnseite, eine hintere Stirnseite und zwei entgegengesetzt liegende seitliche Stirnseiten auf, wobei das Transportelement an seiner vorderen Stirnseite mit dem rückseitigen Wandelement des Behälters schwenkbar verbunden ist. Bei dieser Ausführungsform ist vorgesehen, dass ein Gabelstapler oder dergleichen sich an der hinteren Stirnseite des Transportelements befindet, so dass der Behälter aus Sicht des Gabelstaplers nach vorne geschwenkt werden kann. Es versteht sich, dass der Gabelstapler auch das Transportelement an den entgegengesetzt liegenden seitlichen Stirnseiten aufnehmen kann, so dass der Behälter in Bezug auf die Fahrtrichtung des Gabelstaplers zur Seite gekippt werden kann.

Bei einer weiteren Ausführungsform kann das Transportelement Teil eines Transportfahrzeugs wie etwa eines Gabelstaplers sein.

Es ist von Vorteil, dass im Innern des Behälters im Bereich der Unterseite wenigstens ein zinkenartiges Aufnahmeelement vorgesehen ist, das parallel zur Unterseite ausgerichtet und an dem rückseitigen Wandelement befestigt ist. Dieses Aufnahmeelement dient als Führung für die Aufnahme einer mit Stückgut beladenen Paletten in den Behälter und stützt zusätzlich die Palette während des Transports.

Bei einer bevorzugten Ausführungsform ist der Behälter mittels einer Schwenkvorrichtung schwenkbar gelagert. Mittels der Schwenkvorrichtung kann Behälter von einem Beladezustand in einen Entladezustand und gegebenenfalls in einen Transportzustand geschwenkt werden, so dass mittels der Schwenkvorrichtung die Lage einer in dem Behälter befestigten Palette verändert werden kann.

Beispielsweise kann der Behälter ausgehend von einem Beladezustand, in dem die offene Vorderseite nach vorne, die Unterseite nach unten weisen und eine mittels der Palettensicherung an dem Behälter befestigte Palette horizontal ausgerichtet ist, so geschwenkt werden, dass eine an der Unterseite befindliche und mittels der Palettensicherung befestigte Palette in vertikaler Richtung zeigt und somit zu einer Seitenwand des Behälters wird. Hierdurch entsteht ausgehend von einem Beladezustand ein Transportzustand. Eine offen ausgebildete Vorderseite kann dann zu einer offenen Oberseite werden. Hierdurch kann das Schüttgut besonders sicher transportiert werden.

Weiterhin kann der Behälter mittels der Schwenkvorrichtung so ausgerichtet werden, dass die Palette schräg nach unten in Richtung einer offenen Vorderseite des Behälters zeigt. Somit ist es beispielsweise möglich, die Palette in dem Behälter mittels der Palettensicherung zu halten, während das Schüttgut, das sich auf der Palette befindet, von der Palette in einen Auffangbehälter gleitet. Der Behälter befindet sich hier in einem Entladezustand.

Ist gemäß einer bevorzugten Ausführungsform wenigstens ein Rückhalteelement vorgesehen, so kann in dem Entladezustand eine Abdeckung oder eine Gitterbox, die das Schüttgut umgibt, mittels des Rückhalteelements in dem Behälter gehalten werden. Somit hält die Palettensicherung die Palette in dem Behälter und das Rückhalteelement die Abdeckung oder die Gitterbox in dem Behälter zurück, während das Schüttgut in einen dafür vorgesehenen Behälter gleitet. Auf diese Weise lässt sich das Schüttgut einfach von der umgebenden Abdeckung oder der Gitterbox trennen.

Bei einer bevorzugten Weiterbildung weist das rückseitige Wandelement eine untere Kante und eine obere Kante auf und zwischen dem rückseitigen Wandelement und dem Transportelement ist eine Schwenkachse vorgesehen, wobei sich die Schwenkachse an der Außenseite des rückseitigen Wandelements mit Abstand von der unteren Kante des rückseitigen Wandelements parallel zur unteren Kante des rückseitigen Wandelements befindet.

Wird bei dieser Ausführungsform ein Drehgelenk mit zwei zusammenwirkenden Drehelementen, beispielsweise ein Scharnier, zur Ausbildung einer Schwenkachse verwendet, kann bei geeigneter Positionierung der Drehelemente der Schwenkbereich des Behälters begrenzt werden, so dass dieser nicht unkontrolliert nach unten wegkippt. Bei einem palettenartig ausgebildeten Transportelement kann beispielsweise ein Drehelement im Bereich der Stirnseite des Transportelements auf der Oberseite des Transportelements befestigt werden und das andere Drehelement an dem rückseitigen Wandelement.

Die Schwenkachse befindet sich bei einer Entleervorrichtung mit einer Einfahrtasche vorzugsweise mittig zwischen unterer und oberer Kante des Behälters und an dem freien Ende der Einfahrtasche, um eine optimale Lastverteilung zu erhalten.

Es ist von Vorteil, dass in einem ersten ausgeschwenkten Zustand die Unterseite des Behälters horizontal ausgerichtet ist und in einem zweiten ausgeschwenkten Zustand die Unterseite des Behälters schräg nach unten weist. Mithilfe des ersten ausgeschwenkten Zustands lässt sich eine Palette, auf der sich entsprechendes Schüttgut befindet, einfach in den Behälter einbringen. Dieser Zustand dient somit der Beladung der Entleervorrichtung mit dem sich auf der Palette befindlichen Schüttgut und kann als Beladezustand bezeichnet werden. Der zweite ausgeschwenkte Zustand wird als Entladezustand bezeichnet. Bei diesem Zustand weist die Unterseite und somit die in dem Behälter befindliche Palette nach schräg unten in Richtung der offenen Vorderseite. Befindet sich die Entleervorrichtung in diesem Zustand, kann das auf der Palette befindliche Schüttgut von der Palette herunterrutschen und in einen dafür bereitgestellten Behälter fallen. Der Winkel, den die Rückseite des Behälters mit der Horizontalen einschließt, liegt hierbei vorzugsweise in einem Bereich von 100° bis 150°.

Bei einer bevorzugten Weiterbildung, die vor allem für palettenartige Transportelemente geeignet ist, ist der Abstand der Schwenkachse von der unteren Kante des rückseitigen Wandelements so gewählt, dass in einem ersten ausgeschwenkten Zustand das Transportelement und die Vorderseite des Behälters auf einer gemeinsamen Ebene aufliegen. Mithilfe dieser Ausrichtung lässt sich eine Palette, auf der sich entsprechendes Schüttgut befindet, einfach in den Behälter einbringen. Dieser Zustand dient somit der Beladung der Entleervorrichtung mit dem sich auf der Palette befindlichen Schüttgut und kann als Beladezustand bezeichnet werden.

Wie oben angeführt, ist es von Vorteil, dass in einem zweiten ausgeschwenkten Zustand der Winkel zwischen dem rückseitigen Wandelement und einem horizontal ausgerichteten Transportelement größer als 90° ist, vorzugsweise in einem Bereich zwischen 100° und 150° liegt. Um eine solche Auslenkung zu erhalten, wenn sich die Schwenkachse mit Abstand von der unteren Kante des rückseitigen Wandelements befindet, ist es von Vorteil, dass die Grundplatte eines palettenartigen Transportelements oder die Einfahrtasche an der vorderen Stirnseite nach innen abgeschrägt ist. Der von der Schräge vorgegebene Winkel gibt den Winkelbereich vor, mit welchem der Behälter gegenüber dem palettenartigen Transportelement schwenkbar ist.

Um die Entleervorrichtung einfach und sicher zu transportieren, ist es von Vorteil, dass in einem eingeschwenkten Zustand der Behälter zumindest abschnittsweise oberhalb des Transportelements positioniert ist und dass in einem eingeschwenkten Zustand das rückseitige Wandelement parallel zu dem Transportelement ausgerichtet ist und sich insbesondere zumindest abschnittsweise oberhalb der rechteckigen Grundplatte eines palettenartigen Transportelements befindet. Dieser Zustand eignet sich als Transportzustand der Entleervorrichtung.

Bei einer bevorzugten Ausführungsform ist zumindest ein Teil der Schwenkvorrichtung an dem Behälter befestigt. Beispielsweise ist die Schwenkvorrichtung hydraulisch betätigbar, insbesondere kann die Schwenkvorrichtung wenigstens einen Hydraulikzylinder mit zwei entgegengesetzt liegenden Endabschnitten aufweisen, wobei ein Endabschnitt des Hydraulikzylinders an dem Transportelement und der andere Endabschnitt an dem rückseitigen Wandelement befestigt sind.

Bei einer weiteren Ausführungsform kann zumindest ein Teil des oberen Wandelements verschiebbar ausgebildet sein. Dieses Merkmal kann zusätzlich zu einem schwenkbaren Behälter vorgesehen sein oder als Alternative zu einem schwenkbaren Behälter.

Es ist von Vorteil, dass ein Transportfahrzeug, wie etwa ein Gabelstapler vorgesehen ist, mithilfe dessen der Behälter sowie gegebenenfalls das Transportelement transportierbar sind. Als Transportfahrzeug eignen sich jedoch auch andere Fahrzeuge mit einem Hubmasten.

Bei einer bevorzugten Weiterbildung ist die Schwenkvorrichtung am Transportfahrzeug, insbesondere am Gabelstapler vorgesehen.

Insbesondere dann, wenn ein Transportfahrzeug vorgesehen ist, ist es von Vorteil, dass der Behälter einen Beladezustand, einen Transportzustand und einen Entladezustand aufweist. So ist es von Vorteil, dass im Beladezustand die Vorderseite nach vorne weist. Im Transportzustand ist der Behälter gegenüber dem Beladezustand gedreht, so dass die Vorderseite nach oben weist. Im Entladezustand zeigt die Unterseite nach schräg unten.

Bei einer alternativen Ausführungsform ist die Entleervorrichtung an einer stationären Einheit, beispielsweise an einem Anlagenteil einer Produktions- oder Konfektionieranlage montiert. In diesem Fall verfügt der Behälter über einen Beladezustand und einen Entladezustand. Ein Transportzustand ist nicht zwingend notwendig.

Bevorzugte Ausführungsformen werden anhand der beigefügten Zeichnungen näher erläutert, in denen zeigen:
- Fig. 1: eine Entleervorrichtung gemäß einer ersten Ausführungsform in einer Seitenansicht,
- Fig. 2: die in Fig. 1 dargestellte Entleervorrichtung in einer perspektivischen Ansicht von schräg vorne,
- Fig. 3: die in Fig. 1 dargestellte Entleervorrichtung in einer Ansicht von schräg oben,
- Fig. 4: die in Fig. 1 dargestellte Entleervorrichtung in einer Ansicht von vorne,
- Fig. 5: die in Fig. 1 dargestellte Entleervorrichtung in einem Beladezustand,
- Fig. 6: die in Fig. 1 dargestellte Entleervorrichtung in einem Transportzustand,
- Fig. 7: die in Fig. 1 dargestellte Entleervorrichtung in einem Entladezustand,
- Fig. 8: die in Fig. 1 dargestellte Entleervorrichtung mit einem Gabelstapler,
- Fig. 9: die in Fig. 1 dargestellte Entleervorrichtung mit einem Gabelstapler in einem Beladezustand,
- Fig. 10: die in Fig. 1 dargestellte Entleervorrichtung mit einem Gabelstapler in einem Transportzustand,
- Fig. 11: die in Fig. 1 dargestellte Entleervorrichtung in einem Transportzustand auf einem Gabelstapler,
- Fig. 12: die in Fig. 1 dargestellte Entleervorrichtung in einem Entladezustand,
- Fig. 13: eine Entleervorrichtung gemäß einer zweiten Ausführungsform von vorne mit einer Palettensicherung in einem geöffneten Zustand,
- Fig. 14: die in Fig. 13 dargestellte Entleervorrichtung mit einer Palettensicherung in einem geschlossenen Zustand,
- Fig. 15: die in Fig. 13 dargestellte Entleervorrichtung in einem Transportzustand,
- Fig. 16: die in Fig. 13 dargestellte Entleervorrichtung in einem Beladezustand,
- Fig. 17: die in Fig. 13 dargestellte Entleervorrichtung in einem Entladezustand,
- Fig. 18: eine dritte Ausführungsform einer Entleervorrichtung in einer Ansicht von vorne,
- Fig. 19: eine vierte Ausführungsform einer Entleervorrichtung in einer Seitenansicht und
- Fig. 20: die in Fig. 19 dargestellte Ausführungsform in einer Ansicht von oben.

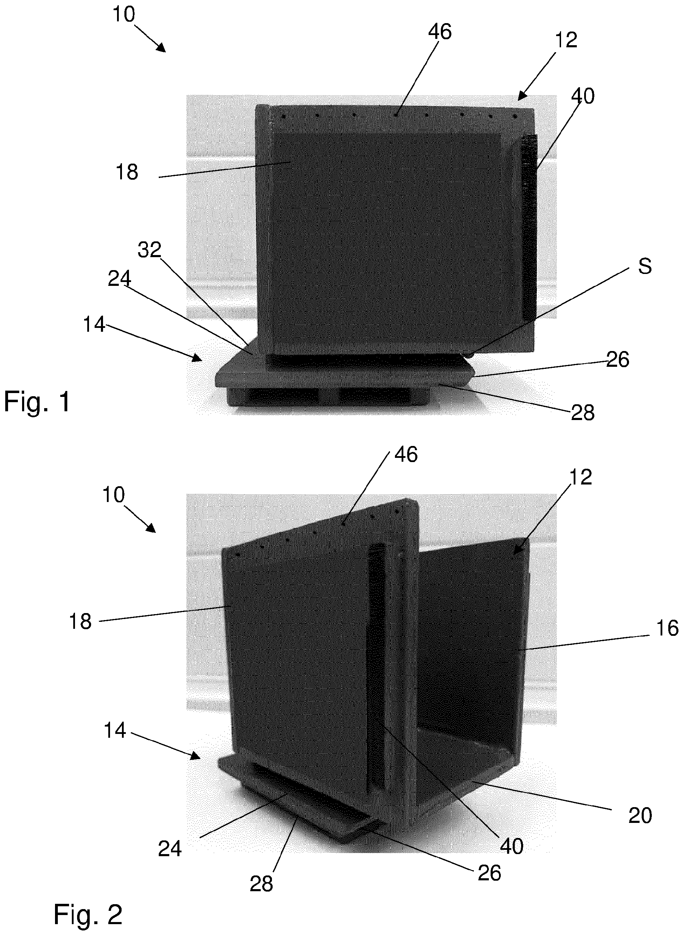

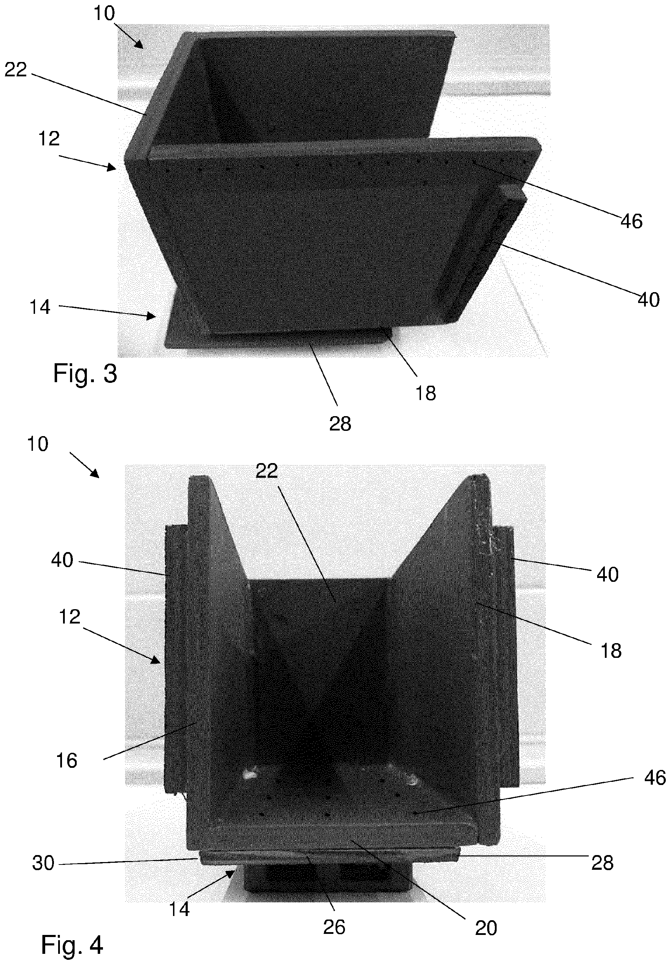

Die Figuren 1 bis 4 zeigen eine Entleervorrichtung 10 gemäß einer ersten Ausführungsform mit einem Behälter 12 und einem Transportelement 14 in einer Transportstellung.

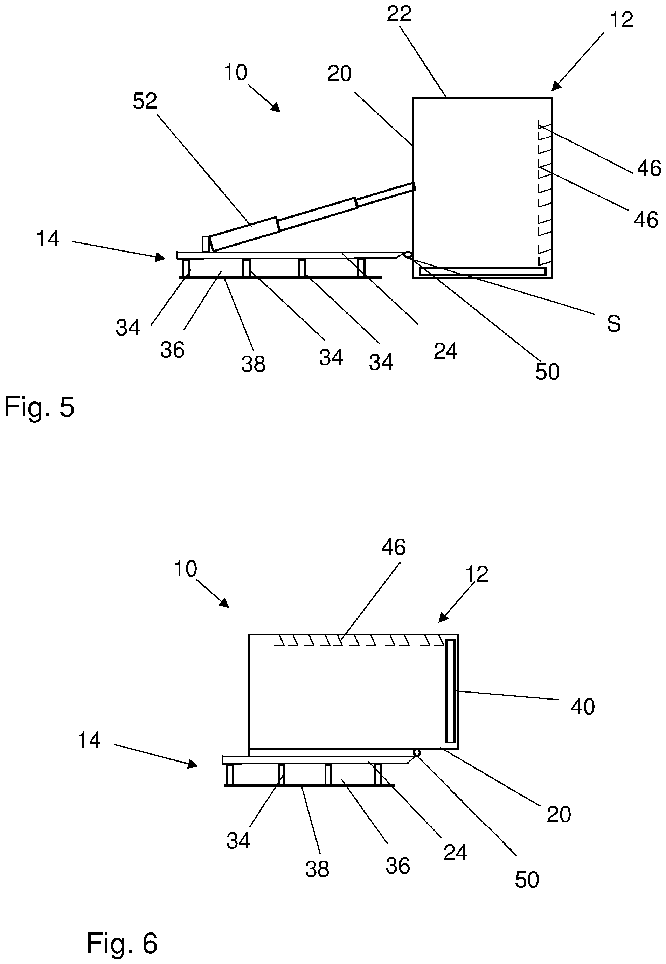

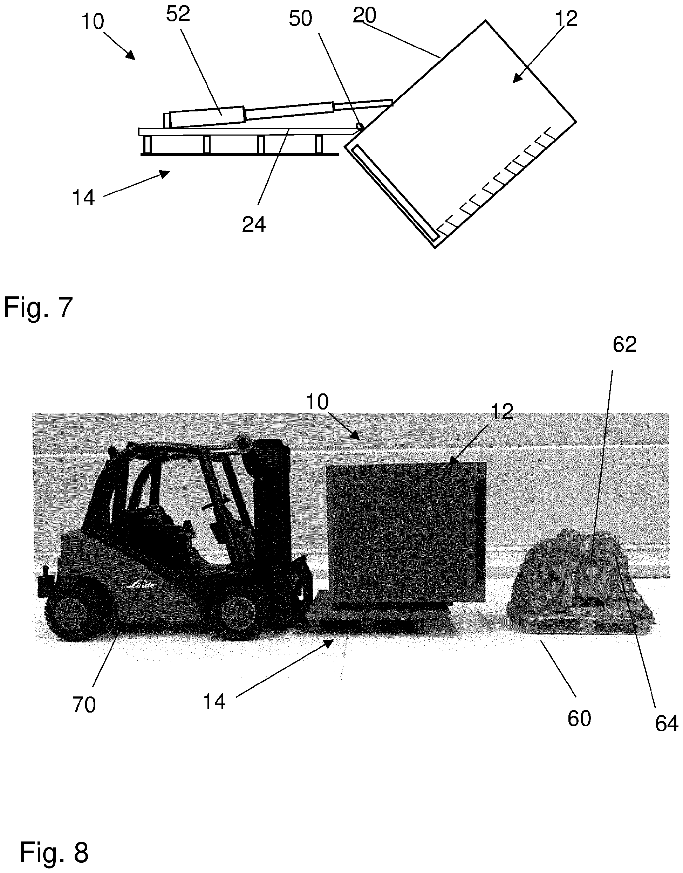

Die Entleervorrichtung 10 umfasst wie in den Figuren 5 bis 7 dargestellt eine Transportstellung, eine Beladestellung und eine Entladestellung. In der in Fig. 5 dargestellten Beladestellung befindet sich der Behälter 12 in einer Grundstellung. In der Transportstellung (Fig. 6) ist der Behälter 12 gegenüber der Grundstellung gedreht und in der Entladestellung (Fig. 7) ist der Behälter gegenüber der Grundstellung verschwenkt. Hierbei wird der Behälter 12 um die gleiche Achse gedreht, wobei der Übergang von der Grund- bzw. Beladestellung in die Transportstellung und der Übergang von der Grund- bzw. Beladestellung in die Entladestellung mit unterschiedlicher Drehrichtung erfolgt.

Die Bezeichnung der einzelnen Bauteile des Behälters 12 wird aus einer Perspektive beschrieben, in der sich der Behälter 12 in der Grundstellung befindet.

Der Behälter 12 ist kastenförmig ausgebildet und weist eine Oberseite, eine Unterseite, zwei entgegengesetzt liegende Seiten, eine Rückseite und eine Vorderseite auf, wobei an den beiden entgegengesetzt liegenden Seiten jeweils ein seitliches Wandelement 16, 18 vorgesehen sind. An der Rückseite befindet sich ein rückseitiges Wandelement 20 und an der Oberseite ein oberes Wandelement 22. Die Unterseite und die Vorderseite sind offen ausgebildet.

Das Transportelement 14 umfasst eine rechteckige Grundplatte 24 mit einer vorderen Stirnseite 26, zwei entgegengesetzt liegende Stirnseiten 28, 30 und eine hintere Stirnseite 32. Die vordere Stirnseite 26 des Transportelements 14 ist entlang der gesamten Stirnseite nach schräg unten und nach innen weisend abgeschrägt.

Unterhalb der rechteckigen Grundplatte 24 befinden sich mehrere im Abstand angeordnete Abstandshalter 34, wodurch zwischen den Abstandshaltern 34 Hohlräume 36 ausgebildet sind. Unterhalb der Abstandshalter 34 befindet sich eine Bodenplatte 38. Das Transportelement 14 ist im Prinzip wie eine Palette ausgebildet. Die Hohlräume 36 sind für die Aufnahme von Zinken eines Gabelstaplers geeignet.

Im Bereich der Unterseite ist eine Palettensicherung 40 vorgesehen. Die Palettensicherung 40 dient dazu eine Palette sicher zu halten. Sie weist somit einen geöffneten Zustand auf, um eine Palette aufzunehmen und einen geschlossenen Zustand, in dem die Palette sicher gehalten wird.

Die Palettensicherung 40 kann beispielsweise aus verschiebbaren Bolzen bestehen, die im Bereich der Vorderseite des Behälters 12, an den beiden seitlichen Wandelementen 16, 18 und gegebenenfalls an dem rückseitigen Wandelement 20 vorgesehen sind und in die üblicherweise bei einer Palette vorgesehenen Hohlräume greifen. Die an den seitlichen Wandelementen 16, 18 und gegebenenfalls an dem rückseitigen Wandelement 22 vorgesehenen verschiebbar gelagerten Bolzen können beispielsweise hydraulisch betätigt werden.

Alternativ können im Bereich der Vorderseite an den seitlichen Wandelementen Klemmbacken vorgesehen sein, die Teil der Palettensicherung sind und ausgelegt sind, eine Palette seitlich festzuklemmen. Auch die Klemmbacken können beispielsweise hydraulisch betätigt werden.

Der Abstand der beiden entgegengesetzt liegenden seitlichen Wandelemente 16, 18 ist so gewählt, dass dieser geringfügig größer ist als die Breite einer Palette. Somit kann die Palette einfach zwischen den beiden entgegengesetzt liegenden seitlichen Wandelementen 16, 18 aufgenommen und sicher von der Palettensicherung gehalten werden.

Idealerweise ist die an der Unterseite des Behälters 12 vorhandene Fläche geringfügig größer als eine aufzunehmende Palette, so dass die Palette einfach zwischen den beiden entgegengesetzt liegenden seitlichen Wandelementen 16, 18 aufgenommen und sicher von der Palettensicherung 40 gehalten werden kann. Darüber hinaus wirkt die in der Palettensicherung 40 gehaltene Palette als Wandelement, so dass der Behälter mit der in der Palettensicherung 40 gehaltenen Palette einen einseitig offenen Behälter bildet.

Im Inneren des Behälters 12 befindet sich an dem oberen Wandelement 22 eine Vielzahl von Rückhalteelementen in Form von Haken 46. Die Haken 46 sind entlang der gesamten Fläche des oberen Wandelements 22 verteilt. Weitere Rückhalteelemente in Form von Haken 46 sind an der Außenseite der seitlichen Wandelemente 16, 18 im Bereich der Vorderseite des Behälters 12 vorgesehen.

Die Entleervorrichtung 10 befindet sich in den Figuren 1 bis 4 in einer Transportstellung, bei der der Behälter 12 mit seinem rückseitigen Wandelement 20 auf der Grundplatte 24 des Transportelements 14 aufliegt. Der Behälter 12 ragt im Transportzustand oder eingeschwenktem Zustand an der vorderen Stirnseite 26 des Transportelements 14 über das Transportelement 14 hinaus.

Der Behälter 12 und das Transportelement 14 sind schwenkbar miteinander verbunden, wobei die Schwenkachse S im Bereich der vorderen Stirnseite 26 des Transportelements 14 vorgesehen ist sowie an dem rückseitigen Wandelement 20. Die Schwenkachse S ist an dem rückseitigen Wandelement 20 parallel zur unteren Kante des rückseitigen Wandelements 20 mit Abstand von der unteren Kante des rückseitigen Wandelements 20 vorgesehen.

In den Figuren 5 bis 7 sind die verschiedene Zustände der Entleervorrichtung 10 dargestellt. In Figur 5 ist der Beladezustand oder Grundzustand gezeigt. Figur 6 zeigt den in den Figuren 1 bis 4 dargestellten Transportzustand, wobei der Behälter 12 im Transportzustand gegenüber dem Beladezustand um 90° nach hinten geschwenkt ist. Figur 7 zeigt den Entladezustand, in dem der Behälter 12 um einen Winkel kleiner 90°, insbesondere um einen Winkel zwischen 30° und 60° nach vorne geschwenkt ist.

Zum Schwenken des Behälters 12 gegenüber dem Transportelement 14 ist ein schwenkbares Gelenk 50 vorgesehen, welches mittels einer Schwenkvorrichtung schwenkbar ist. Das schwenkbare Gelenk 50 ist als Drehgelenk in Form eines Scharniers mit zwei Elementen ausgebildet, wobei sich ein Element des Drehgelenks an der Außenseite des rückseitigen Wandelements 20 des Behälters 12 befindet und das andere Drehelement auf dem Transportelement 14 im Bereich der Stirnseite des Transportelements 14.

Die Schwenkvorrichtung ist hydraulisch ausgebildet und umfasst einen Hydraulikzylinder 52 mit zwei entgegengesetzt liegenden Enden. Die beiden Enden des Hydraulikzylinders 52 sind zum einen an dem Transportelement 14 und zum anderen an dem Behälter 12 befestigt.

Bei dem in Figur 5 dargestellten Beladezustand weist die offene Unterseite nach unten und die offene Vorderseite nach vorne. Die Position der Schwenkachse S zwischen Transportelement 14 und Behälter 12 ist so gewählt, dass in dem Beladezustand das Transportelement 14 und der Behälter 12 auf einer Ebene liegen.

Figur 7 zeigt die Entleervorrichtung 10 in einem Entladezustand, bei dem der Winkel zwischen dem rückseitigen Wandelement 20 und dem Transportelement > 90° ist. In diesem Fall weist die offene Unterseite des Behälters 12 schräg nach unten.

In der in Fig. 6 dargestellten Transportstellung weist die offene Unterseite des Behälters 12 nach vorne.

In den Figuren 8 bis 12 ist ein Beispiel für die Verwendung der Entleervorrichtung 10 gezeigt. Bei den in den Figuren 8 bis 12 dargestellten Anwendungsbeispielen wird eine Palette 60 mit Schüttgut 62, welches mit einer in Form eines Netzes ausgebildeten Abdeckung 64 geschützt ist, verlagert und das auf der Palette 60 befindliche Schüttgut 62 von der Palette 60 sowie der Abdeckung 64 getrennt.

Insbesondere handelt es sich bei dem zu verlagernden Gut um eine Palette 60, auf der sich Brennholzstücke befinden, wobei die Brennholzstücke mittels einer Abdeckvorrichtung in Form eines Netzes sicher auf der Palette 60 gehalten werden.

Ein Gabelstapler 70 erfasst mit seinen Zinken das Transportelement 14, wobei sich die Entleervorrichtung 10 in der Transportstellung befindet. Die Zinken des Gabelstaplers 70 greifen hierbei von der hinteren Stirnseite 32 in die Hohlräume 36 des Transportelements 14 (siehe Fig. 8).

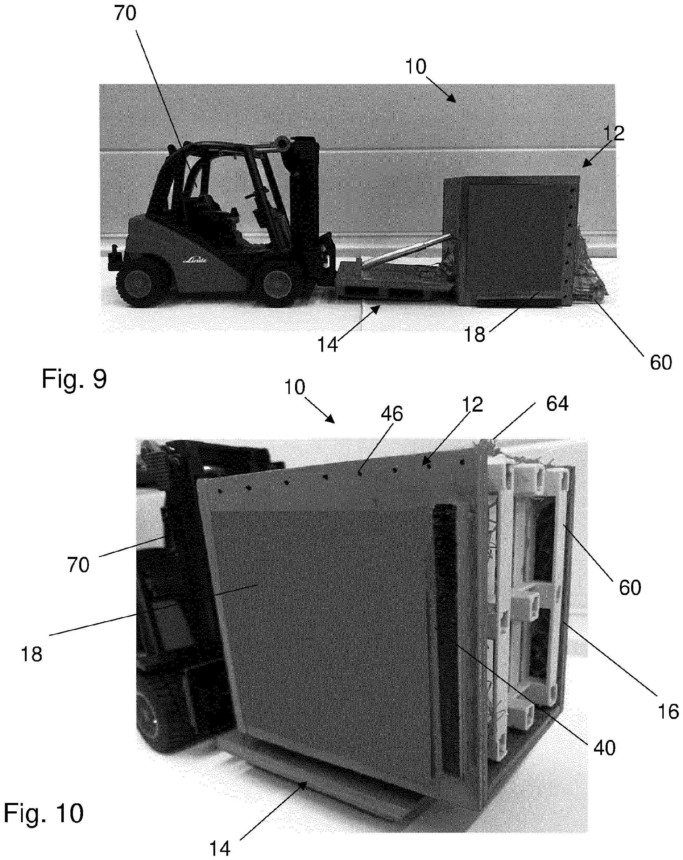

Der Gabelstapler 70 fährt mit der Entleervorrichtung 10 an den Ort, an dem sich die zu verlagernde Palette 60 mit dem Schüttgut 62 befindet. Die Entleervorrichtung 10 wird in den Beladezustand überführt, in dem der Behälter 12 gegenüber dem Transportelement 14 so geschwenkt ist, dass die offene Unterseite nach unten weist. Hierbei gelangt die mit Schüttgut 62 beaufschlagte Palette 60 zwischen die seitlichen Wandelemente 16, 18 des Behälters 12. Der Behälter 12 der Entleervorrichtung 10 kann mittels des Gabelstaplers 70 so verschoben werden, dass sich die Palette 60 vollständig in dem Behälter 12 befindet (siehe Fig. 9). Die im Bereich der Unterseite des Behälters 12 vorgesehene Palettensicherung 40 sorgt dafür, dass die Palette 60 sicher zwischen den beiden seitlichen Wandelementen 16, 18 im Bereich der Unterseite gehalten werden. Die Palette 60 bildet somit ein unteres Wandelement.

Im nächsten Schritt wird der Behälter 12 wieder zurück in die Transportstellung geschwenkt, so dass das rückseitige Wandelement 20 auf dem Transportelement 14 aufliegt. Die Palette 60 bildet nun ein Wandelement, so dass der Behälter 12 nur oben offen ist. Die Palette 60 kann nun an den Zielort transportiert werden (siehe Fig. 10).

In dem Transportzustand kann die Abdeckung 62 , wie etwa ein Netz, entweder an der Beladestelle oder vorzugsweise am Zielort aufgeschnitten und an den Haken 46 im Innern des Behälters und/oder an der Außenwand der seitlichen Wandelemente 16, 18 befestigt werden.

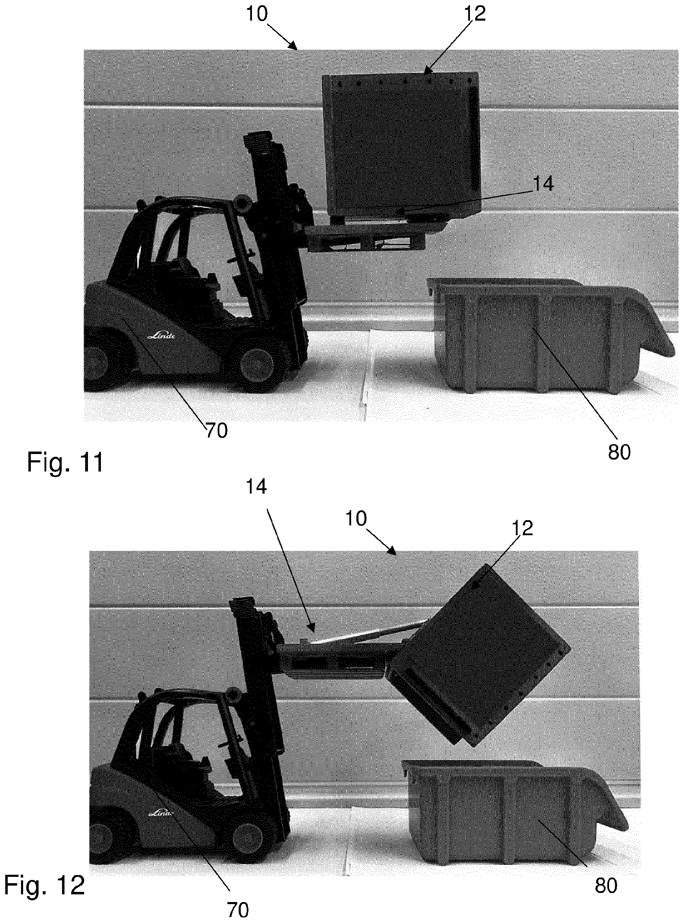

Befindet sich die Entleervorrichtung 10 zusammen mit der Palette 60 an dem Zielort, an dem sich beispielsweise ein Behälter 80 in Form eines Containers befindet, so kann die Entleervorrichtung 10 mittels des Gabelstaplers 70 auf die gewünschte Höhe angehoben werden (siehe Fig. 11) und von dem Transportzustand über den Beladungszustand in den Entladezustand geschwenkt werden (siehe Fig. 12).

In dem Entladezustand wird die Palette mittels der Palettensicherung 40 gehalten. Die Abdeckung 64 in Form eines Netzes wird an den entsprechenden Hakenelementen 46 zurückgehalten und das Schüttgut 62 kann einfach von der Palette 60 in den Behälter 80 gleiten. Es besteht keine Gefahr, dass die Abdeckung 64 und/oder die Palette 60 versehentlich in den Behälter 80 gelangen. Das Schüttgut wird somit dadurch von der Abdeckung 64 sowie der Palette 60 getrennt.

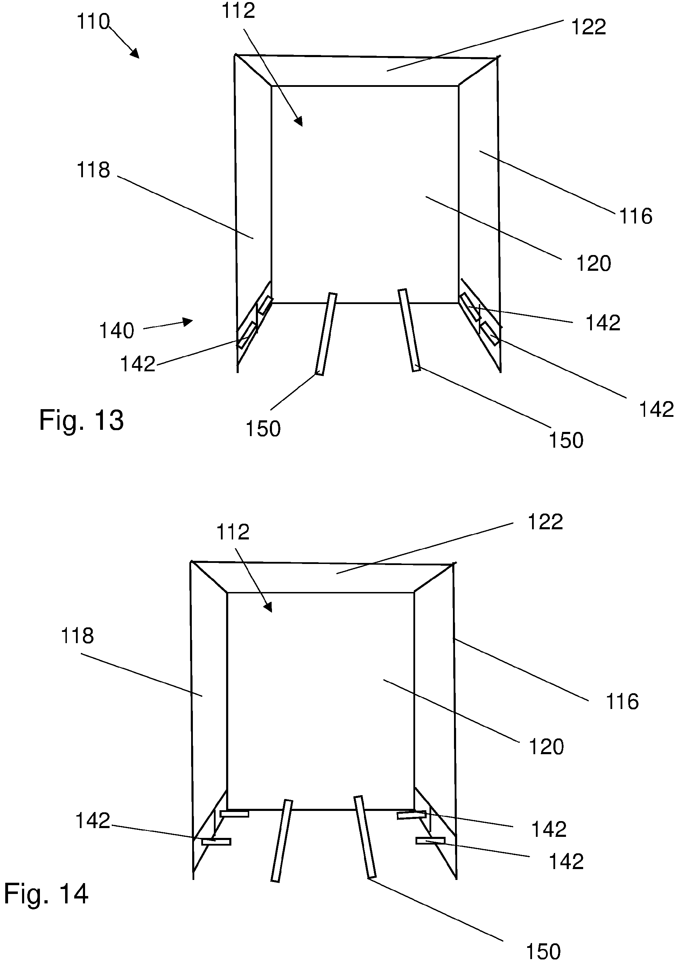

In den Figuren 13 bis 17 ist eine zweite Ausführungsform einer Entleervorrichtung 110 dargestellt. Der Behälter 112 ist kastenförmig ausgebildet und weist eine Oberseite, eine Unterseite, zwei entgegengesetzt liegende Seiten, eine Rückseite und eine Vorderseite auf, wobei an den beiden entgegengesetzt liegenden Seiten jeweils ein seitliches Wandelement 116, 118 vorgesehen sind. An der Rückseite befindet sich ein rückseitiges Wandelement 120 und an der Oberseite ein oberes Wandelement 122. Die Unterseite und die Vorderseite sind offen ausgebildet.

Die in den Figuren 13 bis 17 dargestellte Entleervorrichtung weist eine Palettensicherung 140 in Form von schwenkbaren Bolzen 142 auf. An jedem seitlichen Wandelement 116, 118 befinden sich zwei Bolzen 142, die jeweils schwenkbar gelagert sind.

In Fig. 13 ist ein Zustand gezeigt, in dem sich die Palettensicherung 140 in einer geöffneten Stellung befindet, in der eine nicht dargestellte Palette mit Stückgut aufgenommen werden kann. In diesem Zustand sind die Bolzen 142 eingeschwenkt und parallel zu den seitlichen Wandelementen 116, 118 ausgerichtet.

In Fig. 14 ist eine geschlossene Stellung der Palettensicherung 140 gezeigt, in der eine nicht dargestellte Palette gesichert wird. Hier sind die Bolzen 142 ausgeschwenkt und senkrecht zur den seitlichen Wandelementen 116, 118 ausgerichtet.

Im Innenbereich des Behälters sind an dem rückseitigen Wandelement 120 im Bereich der Unterseite zwei Zinken 150 vorgesehen, die parallel zur Unterseite ausgerichtet sind. Diese Zinken 150 können wie Zinken eines Gabelstaplers in den an einer Palette befindlichen Hohlraum greifen, um die Palette mit Stückgut zusätzlich zur Palettensicherung 140 sicher zu halten.

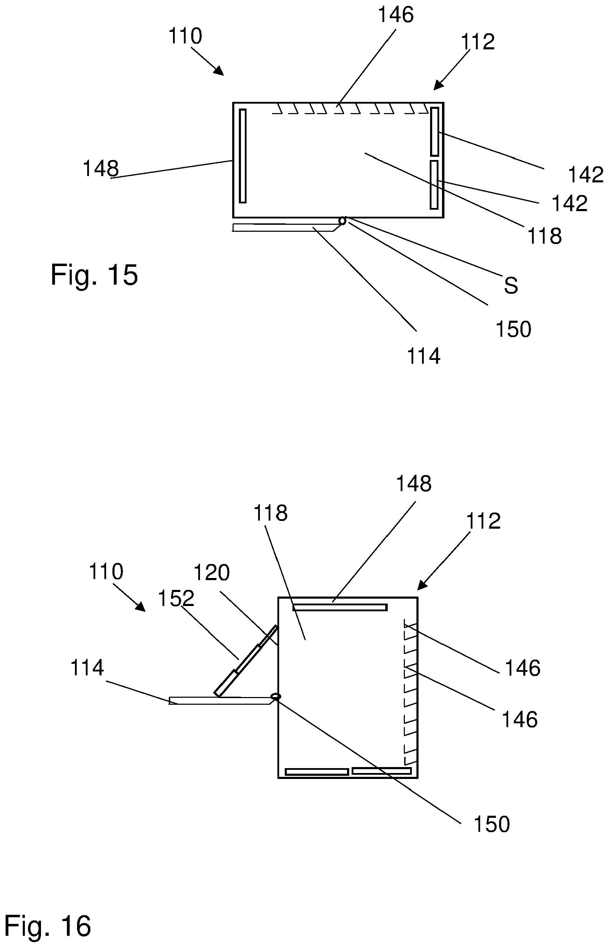

Wie in den Figuren 15 bis 17 dargestellt, ist das Transportelement 114 als Einfahrtasche für Zinken eines Gabelstaplers ausgebildet. Die Schwenkachse S befindet sich zur Optimierung der Lastverteilung mittig auf der Außenseite des rückseitigen Wandelements 120 des Behälters 112 und an dem vorderen Ende der Einfahrtasche. Zum Schwenken des Behälters 112 gegenüber dem Transportelement 114 ist ein schwenkbares Gelenk 150 vorgesehen, welches mittels einer Schwenkvorrichtung schwenkbar ist.

Die Schwenkvorrichtung ist hydraulisch ausgebildet und umfasst einen Hydraulikzylinder 152 mit zwei entgegengesetzt liegenden Enden. Die beiden Enden des Hydraulikzylinders 152 sind zum einen an dem Transportelement 114 und zum anderen an dem Behälter 112 befestigt.

An der Außenseite des Behälters 110 sind Rückhaltevorrichtungen in Form von Haken 146 und eine Klemmleiste 148 vorgesehen.

In Fig. 15 ist eine Transportstellung dargestellt, bei der die offene Unterseite des Behälters 112 nach vorne weist.

Fig. 16 zeigt den Beladezustand, bei dem die offene Unterseite nach unten und die offene Vorderseite nach vorne zeigen.

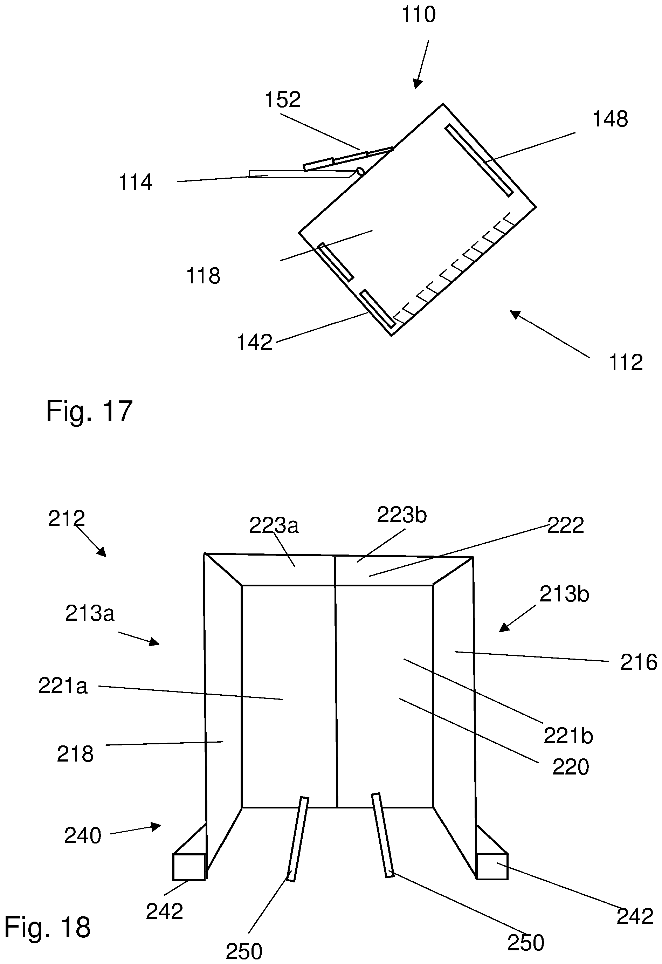

Figur 17 zeigt die Entleervorrichtung 110 in einem Entladezustand, bei dem der Winkel zwischen dem rückseitigen Wandelement 120 und dem Transportelement > 90° ist. In diesem Fall weist die offene Unterseite des Behälters 112 schräg nach unten.

Die Funktionsweise der in den Figuren 13 bis 17 dargestellten Entleervorrichtung 110 entspricht der in Zusammenhang mit den Figuren 1 bis 12 dargestellten Entleervorrichtung 110 mit folgender Ergänzung.

Bei dieser in den Fig. 13 bis 17 dargestellten Ausführungsform können die Haken 146 und die Klemmleiste 148 jeweils von einer geöffneten Stellung in eine Eingriffsstellung hydraulisch überführt werden. In der Eingriffsstellung kann eine Abdeckung auf einer Palette in die Rückhaltevorrichtung eingeführt und dort gehalten werden, während in der geöffneten Stellung die Abdeckung nicht gehalten werden kann. So kann der Haken von einer Eingriffsstellung, in der eine Abdeckung in Form eines Netzes gehalten wird, in eine geöffnete Stellung überführt werden, so dass das Netz aus den Haken fällt. In analoger Weise kann die Klemmleiste eine Eingriffsstellung besitzen, in der eine Abdeckung in Form eines Netzes eingeklemmt ist, und eine geöffnete Stellung, in der das Netz freigegeben wird.

Auf diese Weise kann das Entfernen der Abdeckung aus der Rückhaltevorrichtung nach dem Entleervorgang vereinfacht werden, was den Reinigungsprozess des Behälters nach dem Entleervorgang beschleunigt.

Fig. 18 zeigt eine dritte Ausführungsform einer Entleervorrichtung 210. Bei dieser Ausführungsform ist der Behälter 212 kastenförmig ausgebildet und weist eine Oberseite, eine Unterseite, zwei entgegengesetzt liegende Seiten, eine Rückseite und eine Vorderseite auf, wobei an den beiden entgegengesetzt liegenden Seiten jeweils ein seitliches Wandelement 216, 218 vorgesehen sind. An der Rückseite befindet sich ein rückseitiges Wandelement 220 und an der Oberseite ein oberes Wandelement 222. Die Unterseite und die Vorderseite sind offen ausgebildet.

Im Innenbereich des Behälters 212 sind an der rückseitigen Wand 220 im Bereich der Unterseite zwei Zinken 250 vorgesehen, die parallel zur Unterseite ausgerichtet sind.

Bei dieser Ausführungsform besteht das rückseitige Wandelement 220 aus zwei rückseitigen Wandelementteilen 221a und 221b. Ebenso ist das vordere Wandelement 222 aus zwei vorderen Wandelementteilen 223a und 223b gebildet. Hierdurch wird der Behälter 212 in zwei Behälterteile 213a und 213b getrennt. Die beiden Behälterteile 213a und 213b sind mittels einer nicht dargestellten Verschiebevorrichtung verschiebbar miteinander verbunden, so dass der Abstand zwischen den beiden seitliches Wandelement 216, 218 verändert werden kann. Die beiden Behälterteile 213a und 213b können hierbei mit Abstand voneinander angeordnet sein oder sich zumindest abschnittsweise überlappen.

Die Palettensicherung 240 ist in Form einer Zange ausgebildet, deren Backen 242 im Bereich der Unterseite an den seitlichen Wandelementen 216, 218 angreifen.

Diese Ausführungsform ist geeignet, um Paletten mit Stückgut unterschiedlicher Breite aufzunehmen.

Mit Hilfe der als Zange ausgebildeten Palettensicherung sowie der nicht dargestellten Verschiebevorrichtung lassen sich Paletten unterschiedlicher Größe in dem Behälter 212 sichern.

Die Backen der Palettensicherung können, wenn auch nicht dargestellt, einstückig mit den seitlichen Wandelementen ausgebildet sein. Alternativ können die seitlichen Wandelemente selbst als Backen der Palettensicherung ausgebildet sein, so dass die beiden Behälterteile bereits die Funktion einer Zange besitzen.

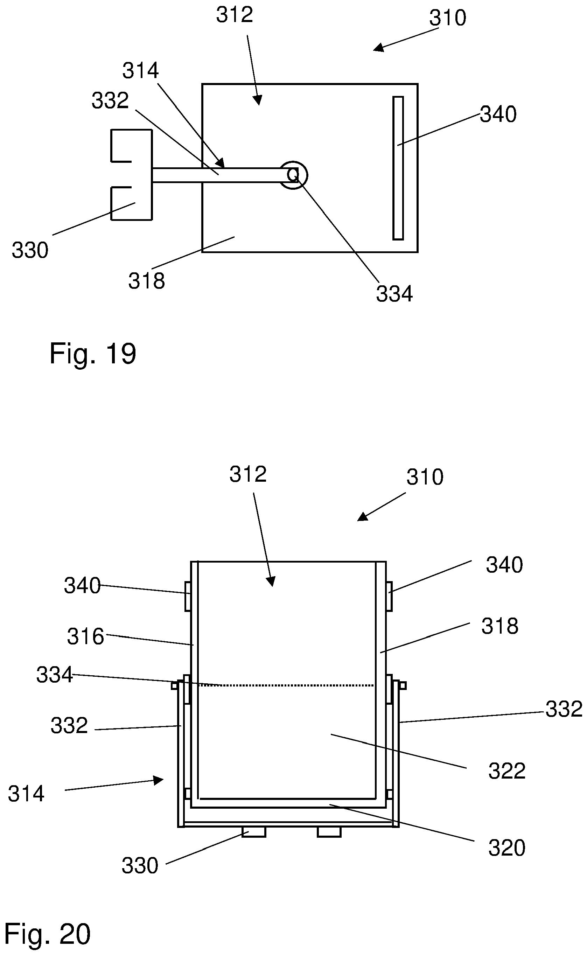

Bei einer in den Figuren 18 und 19 dargestellten vierten Ausführungsform einer Entleervorrichtung 310 ist der Behälter 312 der Entleervorrichtung 310 direkt an einem Mast eines nicht dargestellten Transportfahrzeugs wie etwa eines Gabelstaplers drehbar befestigt. Das Transportelement 314 ist somit mit dem Transportfahrzeug fest verbunden.

Fig. 19 zeigt die Entleervorrichtung 310 in der Transportstellung in einer Seitenansicht und Fig. 20 die in Fig. 19 dargestellte Entleervorrichtung 310 in einer Ansicht von oben.

Die Entleervorrichtung 310 umfasst einen Behälter 312. Der Behälter 312 ist kastenförmig ausgebildet und weist eine Oberseite, eine Unterseite, zwei entgegengesetzt liegende Seiten, eine Rückseite und eine Vorderseite auf, wobei an den beiden entgegengesetzt liegenden Seiten jeweils ein seitliches Wandelement 316, 318 vorgesehen sind. An der Rückseite befindet sich ein rückseitiges Wandelement 320 und an der Oberseite ein oberes Wandelement 322. Die Unterseite und die Vorderseite sind offen ausgebildet. Der Behälter kann beispielsweise wie die Behälter in den in den Figuren 1 bis 18 dargestellten Ausführungsformen aufgebaut sein und insbesondere Rückhaltevorrichtungen für eine Abdeckung einer mit Stückgut versehenen Palette aufweisen.

Im Bereich der Unterseite ist eine Palettensicherung 340 vorgesehen. Das Transportelement 314 ist mittels einer Anbauplatte 330 fest mit einem nicht dargestellten Transportfahrzeug verbunden. Beispielsweise ist das Transportelement ein Gabelstapler oder ein anderes Fahrzeug mit Hubmast.

Das Transportelement umfasst zwei Arme 332, die jeweils parallel zu den seitlichen Wandelementen 316, 318 ausgerichtet sind und ein freies Ende aufweisen. An jedem der beiden seitlichen Wandelemente 316, 318 befindet sich ein Arm, wobei jeder Arm 332 an seinem freien Ende drehbar an dem jeweiligen Wandelement 316, 318 befestigt ist. Die Drehpunkte der beiden Arme 332 liegen auf einer gemeinsamen Drehachse 334, wobei sich die Drehachse 334 möglichst mittig an den beiden seitlichen Wandelementen 316, 318 befindet. Die gepunktete Linie in Fig. 20 zeigt den Verlauf der Drehachse 334, wobei die Drehachse durch den Behälter 312 nicht körperlich ausgebildet ist.

Die beiden Arme 332 sind mit der Anbauplatte 330 verbunden. Die Anbauplatte 330 kann, wenn auch nicht dargestellt, breitenverstellbar sein.

In den Figuren 19 und 20 ist die Transportstellung dargestellt, bei der die offene Unterseite des Behälters 312 nach vorne weist.

Mittels der drehbar gelagerten Arme 322 des Transportelements 314 kann der Behälter 312 in den Beladezustand, bei dem die offene Unterseite nach unten und die offene Vorderseite nach vorne weisen, und in den Entladezustand, bei dem die offene Unterseite des Behälters 312 nach schräg nach unten weist, überführt werden.

Bei den dargestellten Ausführungsformen wird davon ausgegangen, dass die mit Stückgut beladene Palette zusammen mit der Entleervorrichtung 10; 110; 210; 310 transportiert wird und somit mobil ist.

Bei einer nicht dargestellten Ausführungsform ist die Entleervorrichtung in einer stationären Einheit montiert. Bei dieser Aufführungsform ist das Transportelement 14; 114; 214; 314 fest mit der stationären Einheit verbunden. Beispielsweise kann eine mit Stückgut beladene Palette mittels einer automatischen Fördereinheit zu der Entleervorrichtung geführt werden. Die Entleervorrichtung greift und hält die mit Stückgut beladene Palette, so dass die Palette von dem Beladezustand in den Entladezustand überführt werden kann. Gegebenenfalls kann die Entleervorrichtung in den Transportzustand überführt werden, um einfach eine vorhandene Abdeckung wie etwa ein Netz, das das Stückgut auf der Palette hält, aufzuschneiden.

Wenn auch nicht dargestellt, so kann anstelle der Hydraulikvorrichtung mit Hubzylinder jede andere bekannte Schwenkvorrichtung verwendet werden, um den Behälter gegenüber dem Transportelement zu schwenken.

Zusätzlich oder alternativ kann das obere Wandelement verschiebbar ausgebildet werden, um das Schüttgut von der Palette zu schieben.

Um ein dosiertes Entleeren des Schüttguts von der Palette sicherzustellen, kann bei einer nicht dargestellten Ausführungsform an der Vorderseite zumindest abschnittsweise ein Wandelement vorgesehen sein.

Bei einer nicht dargestellten Ausführungsform der Entleervorrichtung sind das Transportelement und der Behälter fest miteinander verbunden, so dass das Transportelement die offene Unterseite des Behälters verschließt und dadurch ein Wandelement des Behälters bildet. Eine aufgenommene Palette wird an der Unterseite des Behälters mittels der Palettensicherung gehalten.

Ein Gabelstapler greift die Entleervorrichtung dann senkrecht zu den seitlichen Wandelementen. Zum Entladen der Entleervorrichtung werden die Zinken eines Gabelstaplers um eine Achse parallel zu den Zinken geschwenkt, so dass die Unterseite schräg nach vorne unten weist. Die in dem Behälter vorgesehenen Haken dienen dazu, das Netz zu halten.

Wenn auch nicht dargestellt, so kann das rückseitige Wandelement mit Sichtöffnungen oder zumindest abschnittsweise transparent ausgebildet sein, um dem Fahrer eines Transportfahrzeugs eine bessere Sicht während der Fahrt zu bieten.

Bei den dargestellten Ausführungsformen wurde von einem quaderförmigen Behälter ausgegangen. Es ist nicht zwingend notwendig, dass der Behälter quaderförmig ausgebildet ist. Beispielsweise können einige der Wandelemente abgerundet oder gebogen sein.

Die beschriebene Vorrichtung ist auch für Stückgüter geeignet, die in Gitterboxen gelagert sind. Hier kann die Rückhaltevorrichtung beispielsweise an der Vorderseite der Behälters vorgesehen sein, um die Gitterbox zu halten.

In Rahmen der Erfindung sind auch nicht dargestellte Ausführungsformen umfasst, bei denen einzelne Merkmale der dargestellten Ausführungsformen weggelassen wurden oder auf andere Weise miteinander kombiniert wurden.

## Patentansprüche

1. Entleervorrichtung für Schüttguter (62), die auf Paletten (60) gelagert werden, umfassend einen Behälter (12; 112; 212; 312) mit einer Oberseite, einer Unterseite, zwei entgegengesetzt liegenden Seiten, einer Rückseite und einer Vorderseite, wobei der Behälter (12; 112; 212; 312) an der Unterseite und der Vorderseite jeweils zumindest abschnittsweise offen ist und wobei an den beiden entgegengesetzt liegenden Seiten jeweils ein seitliches Wandelement (16, 18; 116, 118; 216, 218; 316; 318), an der Rückseite ein rückseitiges Wandelement (20; 120; 220; 320) und an der Oberseite ein oberes Wandelement (22; 122; 222; 322) vorgesehen sind, die zur Ausbildung des Behälters (12; 112; 212; 312) miteinander verbunden sind, und
eine Palettensicherung (40; 140; 240; 340) mit einem geöffneten Zustand und einem geschlossenen Zustand, wobei die Palettensicherung (40; 140; 240; 340) an dem Behälter (12; 112; 212; 312) vorgesehen ist.

2. Entleervorrichtung nach Anspruch 1, **dadurch gekennzeichnet, dass** der Behälter (212) breitenverstellbar ist.

3. Entleervorrichtung nach einem der vorhergehenden Ansprüche, **dadurch gekennzeichnet, dass** die Palettensicherung (40; 140; 240; 340) eine Klemmvorrichtung und/oder eine Verriegelungsvorrichtung mit wenigstens einem Bolzen (142) umfasst.

4. Entleervorrichtung nach einem der vorhergehenden Ansprüche, **dadurch gekennzeichnet, dass** wenigstens eine Rückhaltevorrichtung an dem Behälter (12; 112; 212; 312) vorgesehen ist, wobei die Rückhaltevorrichtung vorzugsweise ein Haken (46; 146) und/oder eine Klemmleiste (148) umfasst.

5. Entleervorrichtung nach einem der vorhergehenden Ansprüche, **dadurch gekennzeichnet, dass** ein Transportelement (14; 114; 214; 314) vorgesehen ist, wobei das Transportelement (14; 114; 214; 314) vorzugsweise die Form einer Palette aufweist oder als Einfahrtasche ausgebildet ist.

6. Entleervorrichtung nach einem der vorhergehenden Ansprüche, **dadurch gekennzeichnet, dass** im Innern des Behälters (112, 212) im Bereich der Unterseite wenigstens ein zinkenartiges Aufnahmeelement (150; 250) vorgesehen ist, das parallel zur Unterseite ausgerichtet und an dem rückseitigen Wandelement (120; 220) befestigt ist.

7. Entleervorrichtung nach einem der vorhergehenden Ansprüche, **dadurch gekennzeichnet, dass** der Behälter (12; 112; 212; 312) mittels einer Schwenkvorrichtung schwenkbar gelagert ist.

8. Entleervorrichtung nach Anspruch 7 **dadurch gekennzeichnet, dass** das rückseitige Wandelement (20; 120; 220) eine untere und eine obere Kante aufweist und zwischen dem rückseitigen Wandelement (20; 120; 220) und dem Transportelement (14; 114; 214) eine Schwenkachse (S) vorgesehen ist, wobei sich die Schwenkachse (S) an der Außenseite des rückseitigen Wandelements (20; 120; 220) mit Abstand von der unteren Kante des rückseitigen Wandelements (20; 120; 220) parallel zur unteren Kante des rückseitigen Wandelements (20; 120; 220) befindet.

9. Entleervorrichtung nach Anspruch 8, **dadurch gekennzeichnet, dass** in einem ersten ausgeschwenkten Zustand die Unterseite des Behälters (12; 112; 212; 312) horizontal ausgereichtet ist und in einem zweiten ausgeschwenkten Zustand die Unterseite des Behälters (12; 112; 212; 312) schräg nach unten weist.

10. Entleervorrichtung nach einem der Ansprüche 7 bis 9, **dadurch gekennzeichnet, dass** in einem eingeschwenkten Zustand der Behälter (12; 112; 212) zumindest abschnittsweise oberhalb des Transportelements (14; 114; 214) positioniert ist, insbesondere dass in einem eingeschwenkten Zustand das rückseitige Wandelement (20; 120; 220) parallel zu dem Transportelement (14; 114; 214) ausgerichtet ist und sich zumindest abschnittsweise oberhalb des Transportelements (14; 114; 214) befindet.

11. Entleervorrichtung nach einem der Ansprüche 5 bis 10, **dadurch gekennzeichnet, dass** zumindest ein Teil der Schwenkvorrichtung an dem Behälter (12; 112; 212) befestigt ist.

12. Entleervorrichtung nach einem der Ansprüche 5 bis 11, **dadurch gekennzeichnet, dass** die Schwenkvorrichtung hydraulisch betätigbar ist, wobei die Schwenkvorrichtung vorzugsweise wenigstens einen Hydraulikzylinder (52; 152) mit zwei entgegengesetzt liegenden Endabschnitten aufweist, wobei ein Endabschnitt des Hydraulikzylinders (52; 152) an dem Transportelement (14; 114; 214) und der andere Endabschnitt an dem rückseitigen Wandelement (20; 120; 220) befestigt sind.

13. Entleervorrichtung nach einem der Ansprüche 1 bis 4, **dadurch gekennzeichnet, dass** zumindest ein Teil des oberen Wandelements (22; 122; 222; 322) verschiebbar ist.

14. Entleervorrichtung nach einem der vorhergehenden Ansprüche, **dadurch gekennzeichnet, dass** ein Transportfahrzeug, insbesondere ein Gabelstapler (70) vorgesehen ist.

15. Entleervorrichtung nach einem der vorhergehenden Ansprüche 5 bis 13 und 14, **dadurch gekennzeichnet, dass** die Schwenkvorrichtung am Transportfahrzeug vorgesehen ist.

16. Entleervorrichtung nach einem der Ansprüche 1 bis 13, **dadurch gekennzeichnet, dass** die Entleervorrichtung an einer stationären Einheit montiert ist.
